# EUROPÄISCHE PATENTSCHRIFT

(11) **EP 2 965 490 B1**
(45) Veröffentlichungstag und Bekanntmachung des Hinweises auf die Patenterteilung: **15.04.2020**
(21) Anmeldenummer: 14727702.4
(22) Anmeldetag: 03.03.2014
(51) Int. Cl.: H04L 29/06, G06F 21/31, G06F 21/36

(54) **VERFAHREN ZUM AUTHENTIFIZIEREN VON PERSONEN**
METHOD FOR AUTHENTICATING PERSONS
PROCÉDÉ D'AUTHENTIFICATION DE PERSONNES

(30) Priorität: 04.03.2013 DE 102013102092
(43) Veröffentlichungstag der Anmeldung: 13.01.2016
(73) Patentinhaber: Palm, Christian, 33129 Delbrück (DE)
(72) Erfinder: Palm, Christian, 33129 Delbrück (DE)
(74) Vertreter: Ostermann, Thomas
(86) Internationale Anmeldenummer: PCT/DE2014/100073
(87) Internationale Veröffentlichungsnummer: WO 2014/135153

(56) Entgegenhaltungen:
- EP-A1- 1 919 123
- US-A1- 2012 272 067

## Beschreibung

Die Erfindung betrifft ein Verfahren zum Authentifizieren einer Person gegenüber einem Host nach dem Oberbegriff des Patentanspruchs 1.

Aus der EP 1 604 257 B1 ist ein Verfahren für Authentifizieren einer Person gegenüber einem Host bekannt, nach dem der Zugriff auf einen Dienst des Hosts durch eine Person ein vorgegebener Algorithmus auf eine vom Host an die Person übertragene Zufallszahl angewendet werden muss. Der verwendete Algorithmus muss hierfür in einem Terminal der Person, beispielsweise im Personalcomputer, gespeichert sein. Der Algorithmus berechnet aus Eingangsparametern wie, der Zufallszahl, einer Anzahl von vorherigen Verbindungen und weiteren Parametern ein temporäres Passwort, das dann dem Host zurückgesandt wird. In dem Host erfolgt eine parallele Berechnung des temporären Passwortes aufgrund der Eingangsparameter, so dass bei Feststellung der Übereinstimmung zwischen dem berechneten temporären Passwortes mit dem von der Person erhaltenen temporären Passwort der Zugriff auf den Dienst freigegeben wird. Nachteilig hieran ist, dass aufgrund des Umfangs des Algorithmus die Authentifizierung relativ aufwendig ist. Es ist auch bekannt, dass für den Zugang bzw. Zugriff auf Funktionen eines Terminals bzw. Endgerätes einer von der Person gemerkte Geheimzahl (PIN) in einer Eingabe-/Ausgabe-Einheit (E/A-Einheit) eingegeben werden muss, die vom Host mit einer von der Person zugewiesenen gespeicherten Geheimzahl verglichen wird. Bei Übereinstimmung wird der Zugriff auf die Funktion des Terminals freigegeben. Hierbei tritt jedoch das Problem auf, dass die unveränderbare Geheimzahl beim Eingeben in die E/A-Einheit durch Dritte ausgespäht und zu Missbrauchszwecken verwendet werden kann.

Aus der US 2012/272067 ist ein kryptografisches Gerät bekannt, mittels dessen ein temporäres Passwort erzeugt wird. Nachteilig hieran ist, dass die Person stets ein solches kryptografisches Gerät bei sich tragen muss.

Aus der EP 1 919 123 ist eine Vorrichtung zum Authentifizieren einer Person gegenüber einem Host bekannt. Zum Authentifizieren muss die Person ein temporäres Passwort eingeben, welches nach einem Algorithmus bzw. nach einer geheimen Passwortermittlungsvorschrift ermittelt wird. Die Ermittlung des temporären Passwortes erfolgt in Abhängigkeit von einer zufallsbezogenen Information, die die Person von dem Host erhält. Die zufallsbezogene Information weist Positionsdaten auf, die mittels des Algorithmus auf ein dem Host und der Person vorbekannten Basispasswort angewendet wird. Die Person muss somit das Basispasswort kennen, um dann Teile dieses Passwortes in einer durch die zufallsbezogenen Informationen vorgegebenen Art in der richtigen Reihenfolge als temporäres Passwort anzugeben.

Aufgabe der vorliegenden Erfindung ist es daher, ein Verfahren zum Authentifizieren einer Person gegenüber einem Host derart anzugeben, dass die Sicherheit bei einer Eingabe einer geheimen Information weiter verbessert wird.

Zur Lösung dieser Aufgabe weist die Erfindung die Merkmale des Patentanspruchs 1 auf.

Nach der Erfindung wird ausschließlich eine von einem Host einer Person zur Verfügung gestellte zufallsbezogene Information unter Anwendung von einem Algorithmus genutzt, um ein Passwort zu ermitteln, das nach Überprüfung der Übereinstimmung mit einem durch den Host in gleicher Weise berechneten Passwort den Zugriff der Person auf die Dienste des Host ermöglicht. Nach der Erfindung wird somit lediglich der Algorithmus auf die gesendete zufallsbezogene Information angewendet, um das dem Zugriff ermöglichende Passwort zu berechnen. Die Erfindung geht dabei davon aus, dass der verwendete geheime Algorithmus nur dem Host und der Person bekannt ist. Ausspähenden dritten Personen nützt das Bekanntsein des eingegebenen Passwortes nichts, wenn bei der nächsten Passwortanforderungsroutine eine andere zufallsbezogene Information bereitgestellt wird. Dies würde eine Ermittlung eines anderen Passwortes nach sich ziehen. Das an den Host gesandte Passwort ist somit in der Regel temporär und ändert sich, wenn sich die vom Host bereitgestellte zufallsbezogene Information ändert. Nach der Erfindung wird die Passwortermittlungsvorschrift durch Auswahl einer oder mehrerer Zeichen der zufallsbezogenen Information und/oder durch Anwenden einer mathematischen Vorschrift auf eine oder mehrere Zeichen der zufallsbezogenen Information gebildet. Die Person braucht sich somit keine Zahlenkombination merken, sondern lediglich die relativ einfache Passwortermittlungsvorschrift, die auf die zufallsbezogenen Information angewendet wird. Die Passwortermittlungsvorschrift kann im einfachsten Fall vorsehen, dass die Person das temporäre Passwort aus der zufallsbezogenen Information dahingehend ermittelt, dass ein oder mehrere Zeichen an einer bestimmten Stelle der zufallsbezogenen Information verwendet wird.

Nach einer bevorzugten Ausführungsform der Erfindung wird der Algorithmus der Person als geheime Passwortermittlungsvorschrift vor Nutzung des Hostdienstes im Rahmen einer Identifikation und/oder eines Vertragsabschlusses hinsichtlich des Hostdienstes mitgeteilt. Im Vergleich zu bekannten Authentifizierungs- oder Identifizierungsroutinen muss sich die Person nicht eine festgelegte Zahl oder Zeichenkombination, sondern eine festgelegte Passwortermittlungsvorschrift merken.

Nach einer Weiterbildung der Erfindung wird die zufallsbezogene Information des Hosts in Abhängigkeit von der Zeit und/oder der Person geändert. Diese Änderung kann nach dem Zufallsprinzip erfolgen. Hierdurch ist sichergestellt, dass dieselbe Person nicht mehrmals hintereinander die gleiche zufallsbezogene Information durch den Host erhält. Ein Ausspähen des eingegebenen Passwortes würde somit nicht zu einem Missbrauch der für die Person vorgesehenen Nutzung der Dienste führen.

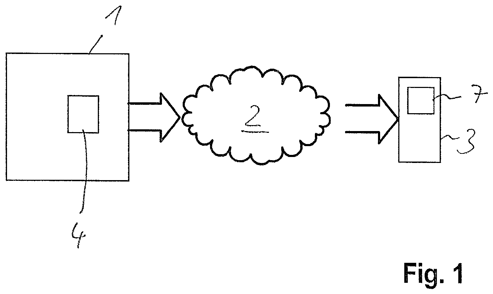

- Figur 1: eine schematische Darstellung einer Authentifizierungsvorrichtung,
- Figur 2: ein Ablaufplan einer Passwortermittlungsroutine,

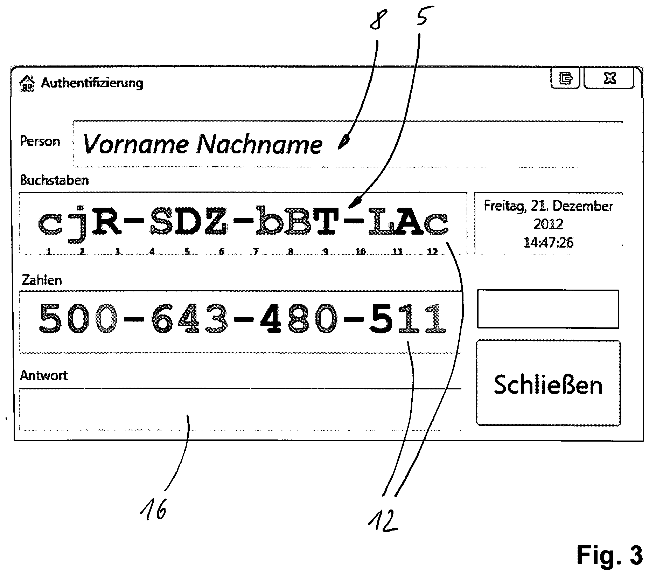

- Figur 3: eine Anzeigevariante einer E/A-Einheit zur Eingabe eines temporären Passwortes und
- Figur 4: eine Liste von möglichen Passwortermittlungsvorschriften.

Die Erfindung ermöglicht die Authentifizierung von Personen insbesondere in ungeschützten Umgebungen, beispielsweise
- am Computer bzw. Heim- oder Unternehmensnetzwerk,
- am Smartphone oder Tablet-Computer,
- am Geldautomaten,
- auf Websites (Zutritt zu Banking, Foren, Social-Networks, Email),
- bei Zugangs-/Zutrittskontrollen (z.B. Türöffner-Systemen),
- beim Online-Banking (via HBCl),
- bei berührungslosen Systemen (z.B. Bargeldtransfer via NFC - Near Field Communication bzw. RFID-Systemen),
- bei Haushaltsgeräten (z.B. Fernseher - als Kindersicherung),
- bei Fahrzeugen (z.B. Wegfahrsperre),
- beim sog. "Pairing" von Geräten (z.B. bei Gerätekopplungen via Bluetooth),
- sog. generelle "RADIUS" Authentifizierung,
- als Überprüfungsabfrage in Call-Centern,
- beim Einloggen via OpenID, OpenID Connect oder anderen Authentifizierungs-Protokollen,
- als PIN-Ersatz zur Freigabe von Funktionen in Chipkarten, wie dem neuen Personalausweis (nPA) oder der neuen elektronischen Gesundheitskarte (eGK).

Eine erfindungsgemäße Vorrichtung zum Authentifizieren einer Person gegenüber einem Host kann überall dort eingesetzt werden, wo ein hohes Maß an Sicherheit bei der Eingabe von Passwörtern gefordert ist.

Ein Host 1 kann ein Hintergrundsystem sein, das über eine Kommunikationseinrichtung 2 mit einem technischem Gerät 3, wie beispielsweise einem Terminal oder einem Endgerät verbunden ist. Die Kommunikationseinrichtung 2 kann beispielsweise ein Netz, insbesondere ein Kommunikationsnetz, wie beispielsweise Internet, LAN-Netz ausgebildet sein. Das technische Gerät 3 kann somit beispielsweise als ein Personalcomputer oder ein Mobiltelefon oder ein anderes tragbares oder nichttragbares Datengerät ausgebildet sein.
Der Host 1 kann alternativ auch als ein Terminal oder als Endgerät ausgebildet sein.

Der Host 1 weist eine Verarbeitungseinrichtung 4 mit einer Steuereinheit und einem Speicher auf, mittels derer die Kommunikation mit dem Terminal 3 gesteuert wird.

Die Verarbeitungseinrichtung 4 weist zum einen einen Zufallsgenerator auf, mittels dessen eine zufallsbezogene Information 5 vorgegebener Länge und bestehend aus numerischen oder alphanumerischen Zeichen erzeugt wird. Ferner weist die Verarbeitungseinrichtung 4 Speichermittel auf, so dass eine Mehrzahl von Algorithmen als geheime Passwortermittlungsvorschriften 6.1, 6.2, 6.3,6.4 abgespeichert werden können.

Das technische Gerät bzw. Terminal 3 weist ebenfalls eine Steuereinheit sowie einen Speicher auf, um eine Kommunikation mit dem Host zu ermöglichen. Ferner weist das Terminal 3 eine Eingabe/Ausgabe-Einheit (E/A-Einheit) 7 auf, mittels derer Informationen einer Person angezeigt und Informationen durch dieselbe eingegeben werden können.

Damit die Person Dienste des Host 1 nutzen kann, beispielsweise den Zugriff auf im Host 1 gespeicherte Informationen oder das Einzahlen oder Abheben von Geld oder der Zugang auf ein Gelände oder in ein Gebäude, ist es erforderlich, das sich die Person über dem Host authentifiziert bzw. identifiziert.

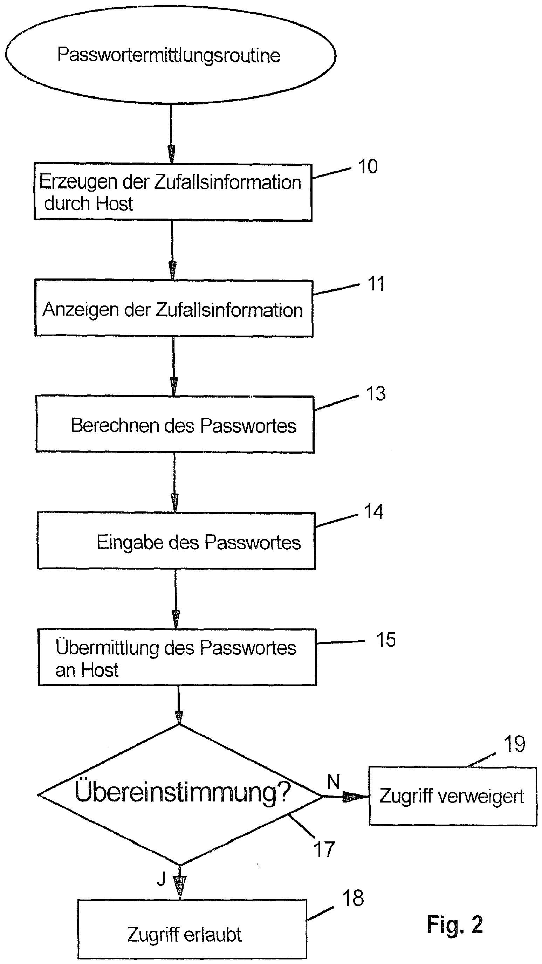

Zur Durchführung der Authentifizierung wird durch die Verarbeitungseinrichtung 4 eine Passwortanforderungsroutine gemäß Figur 2 durchgeführt. Wenn beispielsweise die Person einen Zugang zu einem Gebäude wünscht, wird in der E/A-Einheit 7 durch Terminal 3 ein Fenster geöffnet, in dem die Person in einem Namensfeld 8 ihren Benutzernamen eingeben kann. Alternativ kann auch eine Kreditkarte oder dergleichen in einen Kartenschlitz der E/A-Einheit 7 eingeführt werden oder der Prozess via Sprachsteuerung gestartet werden.

Der Host 1 erzeugt dann eine zufallsbezogene Information 5, siehe Schritt 10 in Figur 2, die dann über die Kommunikationseinrichtung 2 dem Terminal 3 übermittelt wird. Anschließend wird in einem Schritt 11 die zufallsbezogene Information in einem zufallsbezogene Informationsfeld 12 der E/A-Einheit 7 angezeigt. Damit ist eine Passwortanfrage des Host abgeschlossen.

Die zufallsbezogene Information 5 ist eine alphanumerische Zeichenfolge, die in dem Zufallsgenerator der Verarbeitungseinrichtung 4 erzeugt wird. Der Zufallsgenerator ist derart konfiguriert, dass bei jeder Passwortanforderungsroutine einer bestimmten Person stets eine neue zufallsbezogene Information 5 generiert wird. Zur Vermeidung, dass dieselbe zufallsbezogene Information 5 an dieselbe Person übermittelt wird, kann es vorgesehen sein, dass die jeweils einer Person zugewiesenen zufallsbezogene Informationen gespeichert und bei jeder zufallsbezogene informationserzeugung überprüft wird, ob die aktuelle generiert zufallsbezogene Information mit der gespeicherten zufallsbezogene Information übereinstimmt. Im Falle einer Übereinstimmung wird die aktuelle zufallsbezogene Information verworfen und eine neue generiert.

Nach der in den Schritten 10, 11 erfolgten Passwortanfrage erfolgt in den Schritten 13, 14 und 15 eine Passwortantwort. In Schritt 13 wendet die Person auf die zufallsbezogene Information 5 die geheime Passwortermittlungsvorschrift 6 an.

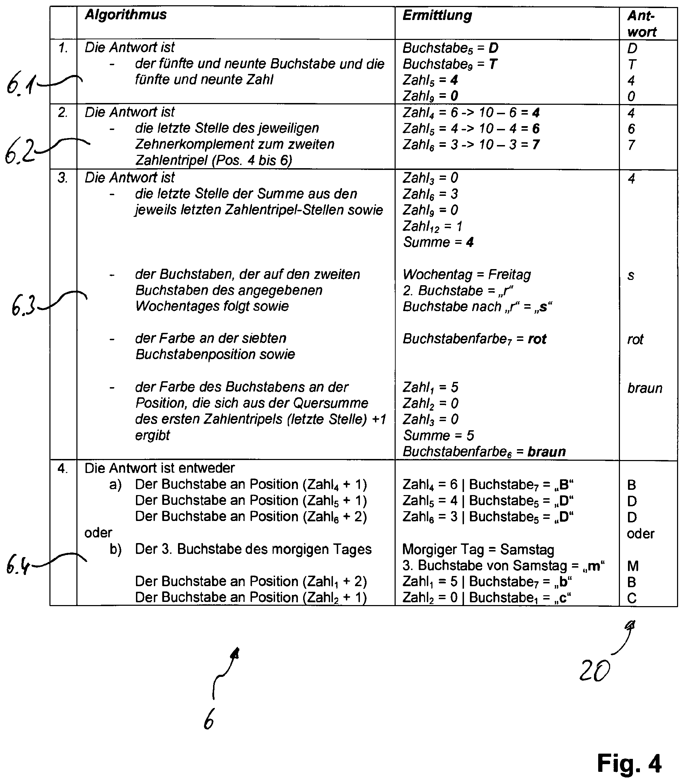

In Figur 4 ist eine Anzahl von geheimen Passwortermittlungsvorschriften 6 beispielhaft dargestellt, die ausschließlich dem Host 1 und der Person bekannt sind. Die geheime Passwortermittlungsvorschrift, die einer Person für eine oder mehrere Dienste vom Host 1 zugewiesen worden ist, ist auf einem gesicherten Wege der Person vorab bei Einrichtung des Dienstes zugestellt worden. Sie sollte vorzugsweise so einfach aufgebaut sein, dass die Person sich die Vorschrift merken kann. Alternativ kann die geheime Passwortermittlungsvorschrift auch auf einem Zettel oder Datenträger vorliegen, auf die die Person gegebenenfalls schnell zugreifen kann.

Eine einfache geheime Passwortermittlungsvorschrift 6.1 in Figur 4 sieht vor, dass die Person die fünfte und neunte Zahl der in der E/A-Einheit 7 dargestellten zufallsbezogene Information 5 bestimmt und diese im Schritt 14 in ein Antwortfeld 16 der E/A-Einheit 7 einträgt. Nachfolgend wird im Schritt 15 dieses temporäre Passwort an den Host 1 übermittelt. In einem Überprüfungsschritt 17 wird dann im Host 1 festgestellt, ob das von der Person eingegebene temporäre Passwort mit dem vom Host 1 berechneten temporären Passwort übereinstimmt. Bei Feststellung der Übereinstimmung wird der Person der Zugriff erlaubt, siehe Schritt 18. Ist keine Übereinstimmung festgestellt worden, wird der Zugriff der Person auf den Dienst des Hostes verweigert, siehe Schritt 19.

In der Figur 4 sind weitere Passwortermittlungsvorschriften 6.2, 6.3, 6.4 dargestellt.

Bspw. ist jeder Person für einen bestimmten Dienst eine vorbestimmte geheime Passwortermittlungsvorschrift zugewiesen. Vorzugsweise ist jeder Person eine vorbestimmte geheime Passwortermittlungsvorschrift 6 für den privaten Gebrauch und eine weitere vorbestimmte geheime Passwortermittlungsvorschrift 6 für den geschäftlichen oder beruflichen Gebrauch zugewiesen. Alternativ kann jeder Person auch unabhängig von dem Nutzungszweck eine einzige vorbestimmte geheime Passwortermittlungsvorschrift 6 zugewiesen sein.

Alternativ kann es zur Erhöhung der Sicherheit vorgesehen sein, dass für den Zugriff auf den Dienst durch eine einzige Person mehrere Passwortermittlungsvorschriften 6 zum Einsatz kommen. Bei Vorgabe einer einzigen zufallsbezogenen Information 5 führen somit mehrere ausschließlich dem Host und der Person bekannte, ansonsten aber geheime Passwortermittlungsvorschriften zu unterschiedlichen temporären Passwörtern. Unter der Annahme, dass Abhörversuche stattfinden mit dem Ziel, die Passwortermittlungsvorschrift aufgrund positiver Authentifizierungsbeispiele zurückzuentwickeln (z.B. durch Re-Engineering), kann mit dieser Verschleierungs-Technik dies ganz erheblich erschwert werden.

Bei der Implementierung des Zufallsgenerators 5 zur Bereitstellung der Passwortermittlungsvorschrift 6 sind folgende Parameter zu berücksichtigen:

| **Parameter** | **Ausprägung** | **Bedeutung** |
|---|---|---|
| Arithmetik | - Aus | - Keine Berechnungen verwenden |
| | - Einfach | - Subtraktion/Addition/Quersummen/Zehner-Komplement |
| | - Schwer | - Multiplikation/Division |
| | | - sonstige mathematische Funktionen |
| Buchstaben | - Aus | - Keine Buchstaben verwenden |
| | - Einfach | - Buchstaben an Positionen nennen |
| | - Mittel | - Einfache Buchstabenarithmetik durchführen (nächster / voriger Buchstabe im Alphabet) |
| | - Schwer | - Buchstabenarithmetik (Buchstabe im Alphabet +/-9) |
| Farben | - Aus | - Keine Farben verwenden |
| | - Einfach | - Farbe an Position |
| | - Mittel | - Komplementärfarbe an Position, Farbe zu Zahl-Zuordnungen |
| | - Schwer | |
| Anzahl der Operationen | - Wenige | Hat Einfluss auf die Anzahl der notwendigen Berechnungsschritte. Je weniger, desto einfacher. |
| | - Mittlere Anzahl | |
| | - Viele | |
| Vereinfachte Auswahl der Positionen | - Keine | - Es werden rein zufällige Positionen verwendet |
| | - Beschränken auf ganze Tripel oder erste, mittlere und letzte Position von Zahlentripeln | - Es werden einfach zu erkennende Positionen verwendet (niedrigerere Sicherheit) |
| Iterationen | - Eine | - Das Ergebnis einer Berechnung wird direkt verwendet |
| | - Zwei | - Das Ergebnis einer Berechnung fließt in eine erneute Berechnung ein und wird dann verwendet |
| | - Drei | - Wie oben jedoch mit einem weiteren Berechnungsschritt |
| Parallele Algorithmen | - Einer | - Es ist genau eine richtige Antwort möglich |
| | - Zwei | - Es sind 2 richtige Antworten möglich |
| | - Drei | - Es sind 3 richtige Antworten möglich |

Die zufallsbezogene Information 5, die bei der Passwortanfrage in der E/A-Einheit 7 dargestellt wird, kann aus alphanumerischen Zeichen unterschiedlicher Farbe bestehen, nämlich
beispielsweise:

| **Position** | **Buchstabe** | **Zusatzinfo zum Buchstaben** | **Zahl / Farbe** | **Zusatzinfo zur Zahl** |
|---|---|---|---|---|
| 1. | c | Kleinbuchstabe / orange | 5 | Grau |
| 2. | j | Kleinbuchstabe / blau | 0 | Blau |
| 3. | R | Großbuchstabe / grün | 0 | Rosa |
| 4. | S | Großbuchstabe / gelb | 6 | Orange |
| 5. | D | Großbuchstabe / grün | 4 | Grau |
| 6. | Z | Großbuchstabe / braun | 3 | Magenta |
| 7. | b | Kleinbuchstabe / rot | 4 | Grün |
| 8. | B | Großbuchstabe / gelb | 8 | Gelb |
| 9. | T | Großbuchstabe / grün | 0 | Blau |
| 10. | L | Großbuchstabe / blau | 5 | Schwarz |
| 11. | A | Großbuchstabe / grün | 1 | Grau |
| 12. | c | Kleinbuchstabe / rot | 1 | Magenta |

Ist der Host 1 als ein Endgerät, beispielsweise als ein Mobiltelefon ausgebildet, demgegenüber sich die Person identifizieren soll, ist eine lokale Implementierung der geheimen Passwortermittlungsvorschrift 6 in dem Mobiltelefon erforderlich. Zur Erhöhung der Sicherheit sollte diese Passwortermittlungsvorschrift auf einem Chip des Mobiltelefons oder in einem tragbaren Datenträger der Person gespeichert werden. Der tragbare Datenträger kann kontaktbehaftet und/oder kontaktlos betrieben sein und kommuniziert mit dem Mobiltelefon.

Ist der Host 1 ein Hintergrundsystem bzw. ein Server, erfolgt die Kommunikation zwischen dem Host 1 über die Kommunikationseinrichtung 2, die als ein Datennetz ausgebildet ist. Es erfolgt vorzugsweise eine verschlüsselte Datenübertragung. Das Terminal 3 braucht die geheime Passwortermittlungsvorschrift 6 nicht zu kennen. Solange einer dritten Person, in betrügerischer Absicht, die geheime Passwortermittlungsvorschrift nicht bekannt ist, kann die Person sich mit dem gleichen Benutzerkonto gegenüber unterschiedlichen Hosts 1, beispielsweise einer Webseite, einer Bank oder einem lokalen Netzwerk authentifizieren. Eine einzige geheime Passwortermittlungsvorschrift 6 kann für die Authentifizierung unterschiedlicher Zugriffe der Person genutzt werden.

Die geheime Passwortermittlungsvorschrift 6 könnte beispielsweise in einem standardisierten Template oder in einem Kompilat aus Quellcode gespeichert sein. Beispielsweise könnte die geheime Passwortermittllungsvorschrift 6 in einer Java-Smartcard gespeichert sein und auch nur dort zur Ausführung gebracht werden.

Die Erfindung ermöglicht insbesondere Anwendungen in der Öffentlichkeit, da das von der Person eingegebene temporäre Passwort nur temporär gültig ist, nämlich nur für eine einzige Passwortanforderungsroutine. Bei der nächsten Passwortanforderungsroutine wird ein anderes temporäres Passwort 20 ermittelt, das durch z.B. Spracherkennung von der E/A-Einheit 7 aufgenommen werden kann. Alternativ kann die E/A-Einheit 7 auch als ein berührungsempfindlicher Bildschirm (Touch-Screen) ausgebildet sein, um in kompakter Weise eine Ein- und Ausgabe von Informationen zu ermöglichen. Vorzugsweise ist der Bildschirm als ein Farbbildschirm ausgebildet, so dass farbige Zeichen für die zufallsbezogene Information 5 genutzt werden können.

Die zufallsbezogene Information 5 kann alternativ eine Information mit Zufallsanteilen sein, ohne ausschließlich Zufallsinformationen zu enthalten. Entscheidend für die Sicherheit ist die geheime Selektion der für die Berechnung des temporären Passwortes notwendigen Anteile. Beispielsweise kann die zufallsbezogene Information 5 auch Wochentags- oder Datumsangaben und/oder Uhrzeitangaben zusätzlich zu den Zufallsinformationen enthalten.

Die zufallsbezogene Information 5 kann aus numerischen und/oder alphanumerischen Zeichen und/oder binären Daten und/oder Farbcode-Daten bestehen.

Die Erfindung ermöglicht eine einfache und sichere Authentifizierung, insbesondere ermöglicht sie:
- Sicherheit gegen Abhören, Keylogger, Trojaner, Man-in-the-middle-Attacken
- Spracheingabe möglich
- Passwortwechsel bzw. Wechsel der Passwortermittlungsvorschrift seltener notwendig
- Keine Replay-Attacken möglich
- Keine zusätzliche Hardware notwendig
- Nur ein Algorithmus zu merken (bei Verwendung eines zentralen Authenthifizierungs-Services)

Wie aus Figur 4 ersichtlich ist, besteht die Passwortermittlungsvorschrift 6.1 aus einer Auswahl einer oder mehrerer Zeichen der zufallsbezogenen Information 5. Die Person braucht sich lediglich eine bestimmte Anzahl von Stellen bzw. Positionen von Zeichen in der zufallsbezogenen Information 5 merken und keine Zahlenkombination. Die Eingabe der durch die Passwortermittlungsvorschrift 6.1 bestimmten Zeichen der zufallsbezogenen Information 5 führt dann zu einem positiven Authentifizierungsergebnis, was den Zugang ermöglicht. Gemäß der Passwortermittlungsvorschrift 6.2, 6.3, 6.4 wird diese durch Anwenden einer einfachen mathematischen Vorschrift auf eine oder mehrere Zeichen der zufallsbezogenen Information 5 bestimmt. Ggf. kann auch eine Kombination der Auswahl von einer oder mehreren Zeichen der zufallsbezogenen Information und der Anwendung mathematischer Vorschriften auf eine oder mehrere Zeichen der zufallsbezogenen Information 5 erfolgen. Dies kann abhängig sein von der Person, die eine gewünschte Passwortermittlungsvorschrift mit dem Host vereinbart.

Nach einer weiteren Ausführungsform der Erfindung kann auf die zufallsbezogene Information 5 auch eine Alarmvorschrift angewendet werden, die von der Passwortermittlungsvorschrift abhängig ist. Wenn der Person die zufallsbezogenen Information von dem Host zugeleitet worden ist, kann durch Anwenden der Alarmvorschrift, bspw. eine Modifizierung der Passwortermittlungsvorschrift, bspw. die umgekehrte Reihenfolge des nach der Passwortermittlungsvorschrift erzeugten temporären Passwortes, dem Host mitgeteilt werden, dass ein Alarm vorliegt. Wenn das Endgerät der Person bspw. ein Geldautomat ist, kann auf diese Weise dem Host auf nicht erkennbare Weise mitgeteilt werden, dass der Geldautomat blockiert werden soll. Nach Überprüfung des an den Host übersendeten Alarmpasswort auf Übereinstimmung mit dem durch den Host berechneten Alarmpasswortes aus der zufallsbezogenen Information gemäß der vorgegebenen Alarmvorschrift kann der Host die Blockierung des Geldautomates einleiten bzw. durchführen.

Nach einer Weiterbildung der Erfindung kann in das Authentifizierungsverfahren eine Authentizitätsroutine integriert sein, mittels derer die Authentizität des Host gegenüber der Person ermittelt werden kann. Zu diesem Zweck erhält der Host eine entsprechende Authentizitätsanfrage von der Person. Die von dem Host der Person gesendete zufallsbezogene Information 5 ist so modifiziert, dass sie ein nutzerbezogenes Authentizitätsmerkmal enthält, sodass die Person in einem ersten Schritt die Authentizität anhand der vorliegenden zufallsbezogenen Informationen überprüfen kann. Die Überprüfung der Authentizität erfolgt mittels der nutzerbezogenen Authentizitätsvorschrift, die ausschließlich dem Host und der Person bekannt sind. Der Host hat zufallsbezogene Information 5 entsprechend dieser Authentizitätsvorschrift modifiziert und der diese der Person zugesandt. Die Person ermittelt aus der zufallsbezogenen Information 5 unter Anwendung der Authentizitätsvorschrift ein Authentizitätsergebnis, was mit einem der Person vorliegenden vorgegebenen Authentizitätsergebnis auf Übereinstimmung überprüft wird. Stimmen diese beiden Ergebnisse überein, ist die Authentizität des Hosts gegenüber der Person gegeben.

Als Authentizitätsvorschrift kann bspw. vorgesehen sein, dass in der Antwort des Hosts die zufallsbezogenen Information 5 stets drei blaue Zahlen enthält. Alternativ kann die nutzerbezogene Authentizitätsvorschrift eine Quersumme von 12 im letzten Zahlentripel aufweisen. Die nutzerbezogene Authentizitätsvorschrift kann bspw. Vorschriften enthalten, wie Sie in der Figur 4 für die Passwortermittlungsvorschrift angegeben sind. Wesentlich ist, dass sich die Passwortermittlungsvorschrift und die Authentizitätsvorschrift voneinander unterscheiden.

Die nutzerbezogene Authentizitätsvorschrift kann durch eine Auswahl einer oder mehrerer Zeichen der zufallsbezogenen Information 5 und/oder durch Anwendung einer mathematischen Vorschrift auf eine oder mehrere Zeichen der zufallsbezogenen Information 5 gebildet sein.

Die Anfrage der Person an den Host kann durch Übermitteln einer Nutzeridentifikation erfolgen, wie sie bspw. bei im E-Mail-Verkehr üblich ist. Nachdem die Authentizität des Hosts durch die Person festgestellt worden ist, kann dann durch Eingabe des temporären Passwortes die Kommunikation mit dem Host oder einer anderen Person erfolgen.

## Patentansprüche

1. Verfahren zum Authentifizieren einer Person gegenüber einem Host (1), wobei der Host (1) von der Person ein temporäres Passwort (20) anfordert für den Zugriff eines Dienst des Hosts (20), dass eine zufallsbezogene Information (5) erzeugt wird, die der Person über eine Kommunikationseinrichtung (2) als Eingangswert für einen Algorithmus zur Verfügung gestellt wird, aus dem das temporäre Passwort (20) berechnet wird, dass derselbe Algorithmus von der Person und dem Host (1) angewendet wird zur Berechnung des Passwortes und dass nach Feststellung der Übereinstimmung zwischen dem durch die Person und dem Host (1) berechneten Passwort der Zugriff der Person auf den Dienst des Host (1) freigegeben wird, dass die zufallsbezogene Information (5) im Rahmen einer Passwortanforderungsroutine des Host (1) der Person angezeigt wird und dass die Person unter Anwendung des als eine geheime Passwortermittlungsvorschrift ausgebildeten Algorithmus' mit der Eingabe eines temporären Passwortes (20) antwortet, **dadurch gekennzeichnet, dass** als Eingangsgröße für die Passwortermittlungsvorschrift (6, 6.1, 6.2, 6.3, 6.4) ausschließlich die zufallsbezogene Information (5) verwendet wird, wobei die Passwortermittlungsvorschrift (6, 6.1, 6.2, 6.3, 6.4) die Auswahl einer oder mehrerer Zeichen der zufallsbezogenen Informationen (5) und/oder durch Anwenden einer mathematischen Vorschrift auf eine oder mehrere Zeichen der zufallsbezogenen Information (5) vorsieht.

2. Verfahren nach Anspruch 1, **dadurch gekennzeichnet, dass** während der Passwortanforderungsroutine zuerst eine Passwortanfrage von dem Host (1) an die Person erfolgt, wobei die zufallsbezogene Information (5) angezeigt wird, und dass danach eine Passwortantwort durch die Person erfolgt, wobei das temporäre Passwort (20) an den Host (1) übermittelt wird.

3. Verfahren nach Anspruch 1 oder 2, **dadurch gekennzeichnet, dass** über die Kommunikationseinrichtung (2) ausschließlich die zufallsbezogene Information (5) von dem Host (1) zu einer Eingabe-/Ausgabeeinheit (7) einerseits und das temporäre Passwort (20) von der Eingabe-/Ausgabeeinheit (7) zu dem Host andererseits übertragen wird.

4. Verfahren nach einem der Ansprüche 1 bis 3, **dadurch gekennzeichnet, dass** der Algorithmus als geheime Passwortermittlungsvorschrift (6, 6.1, 6.2, 6.3, 6.4) der Person vor der Passwortanforderungsroutine bereitgestellt wird.

5. Verfahren nach einem der Ansprüche 1 bis 4, **dadurch gekennzeichnet, dass** bei jeder Passwortanforderungsroutine einer bestimmten Person jeweils eine mittels eines Zufallsgenerators erzeugte unterschiedliche zufallsbezogene Information (5) zugeführt wird.

## Claims

1. A method for authenticating a person with respect to a host (1), wherein the host (1) requests a temporary password (20) from the person for access to a service of the host, that a random-based information (5) is generated, which is available to the person on a communication device (2) as an input value for an algorithm, from which the temporary password (20) is calculated, that the same algorithm is used by the person and the host (1) to determine the password, and that after verification of conformity between the password as determined by the person and the host (1), the person is given access to the service of the host (1), that the random-based information (5) is displayed to the person as part of a password request routine of the host (1) and that the person responds with a temporary password (20) by providing the algorithm based on a secret password determination rule, **characterized in that** only the random-based information (5) is used as an input variable for the temporary password (20) determined by the secret password determination rule (6, 6.1, 6.2, 6.3, 6.4), whereby the password determination rule (6, 6.1, 6.2, 6.3 6.4) provides for the selection of one or more characters of the random-based information (5) and/or by application of a mathematical procedure to one or more characters of the random-based information (5).

2. The method of claim 1, **characterized in that** during the password request routine first a password request is made from the host (1) to the person, wherein the random-based information (5) is displayed, and wherein after a password response is carried out by the person, the temporary password (20) is received by the host (1).

3. The method of claim 1 or 2, **characterized in that** on the one hand via the communication means (2) only the random-based information (5) is transmitted from the host (1) to an input/output unit (7) and on the other hand only the temporary password (20) is transmitted from the input/output unit (7) to the host.

4. The method according to any one of claims 1 to 3, **characterized in that** the algorithm is provided to the person as secret password determination rule (6, 6.1, 6.2, 6.3, 6.4) prior to the password request routine.

5. The method according to any one of claims 1 to 4, **characterized in that**, for each password request routine of a specific person, in each case a different random number generated by means of a random-based information (5) is supplied.

## Revendications

1. Procédé d'authentification d'une personne auprès d'un hôte (1), sachant que l'hôte (1) exige de la personne un mot de passe (20) temporaire pour l'accès d'un service de l'hôte (1)pour la génération d'une information se référant au hasard (5), qui est mise à la disposition de la personne par le biais d'un dispositif de communication (2) en tant que valeur d'entrée pour un algorithme, à partir duquel le mot de passe (20) temporaire est calculé, le même algorithme étant utilisé par la personne et l'hôte (1) pour le calcul du mot de passe, et l'accès de la personne au service de l'hôte (1) étant libre après la constatation de la concordance entre le mot de passe calculé par la personne et celui calculé par l'hôte (1), l'information se référant au hasard (5) étant indiquée à la personne dans le cadre d'une routine d'exigence de mot de passe de la part de l'hôte (1) et la personne répondant avec l'entrée d'un mot de passe (20) temporaire, en utilisant l'algorithme, conçu en tant que consigne de détermination de mot de passe secrète, **caractérisé en ce que** comme grandeur d'entrée pour la consigne de détermination de mot de passe (6, 6.1, 6.2, 6.3, 6.4) on utilise exclusivement l'information se référant au hasard (5), sachant que la grandeur d'entrée pour la consigne de détermination de mot de passe (6, 6.1, 6.2, 6.3, 6.4) prévoit la sélection d'un ou de plusieurs caractères de l'information se référant au hasard (5) et / ou, par application d'une consigne mathématique sur un ou plusieurs caractères de l'information se référant au hasard (5).

2. Procédé selon la revendication 1, **caractérisés en ce que**, pendant la routine d'exigence du mot de passe, a d'abord lieu une demande de mot de passe de la part de l'hôte (1) à la personne, sachant que l'information par rapport au hasard (5) est affichée et que la personne répond ensuite par le mot de passe, sachant que le mot de passe (20) temporaire est transmis à l'hôte (1).

3. Procédé selon revendication 1 ou 2, **caractérisé en ce que** par le biais du dispositif de communication (2) sont exclusivement transmis l'information se référant au hasard (5) de l'hôte (1) à une unité entrée / sortie (7), d'une part, et le mot de passe (20) temporaire de l'unité entrée / sortie (7) à l'hôte, d'autre part.

4. Procédé selon l'une des revendications 1 à 3, **caractérisé en ce que** l'algorithme est mis à la disposition de la personne, en tant que grandeur d'entrée pour la consigne de détermination de mot de passe secrète (6, 6.1, 6.2, 6.3, 6.4), avant la routine d'exigence du mot de passe.

5. Procédé selon l'une des revendications 1 à 4, **caractérisé en ce que**, lors de chaque routine d'exigence du mot de passe, une information se référant au hasard (5) différente, générée par un générateur aléatoire, est chaque fois conduite à une personne déterminée.
